# EUROPEAN PATENT SPECIFICATION

(11) **EP 2 699 427 B1**
(45) Date of publication and mention of the grant of the patent: **07.10.2020**
(21) Application number: 12729335.5
(22) Date of filing: 19.04.2012
(51) Int. Cl.: B43L 1/00, B43L 1/06, B43L 1/10, G06F 3/03, G06F 3/033, A01N 59/16, G06F 3/041

(54) **METHOD FOR MANUFACTURING AN ANTIMICROBIAL ENAMELLED COMMUNICATION PANEL**
VERFAHREN ZUR HERSTELLUNG EINES ANTIMIKROBIELL EMAILLIERTEN KOMMUNIKATIONSTAFELS
PROCÉDÉ DE FABRICATION D'UN PANNEAU DE COMMUNICATION ÉMAILLÉ ANTIMICROBIEN

(30) Priority: 21.04.2011 BE 201100230
(43) Date of publication of application: 26.02.2014
(73) Proprietor: Polyvision, Naamloze Vennootschap, 3600 Genk (BE)
(72) Inventor: GYPEN, Leo Albert Julia, BE-3520 Zonhoven (BE); VAN DE BROEK, Wout Bert Katarinus, B-3930 Hamont-Achel (BE)
(74) Representative: Donné, Eddy
(86) International application number: PCT/BE2012/000019
(87) International publication number: WO 2012/142681

(56) References cited:
- EP-A1- 0 942 351
- WO-A1-01/46900
- WO-A1-02/37409
- WO-A1-2009/000053
- CN-A- 101 580 342
- JIANG ET AL: "Study of the antibacterial function of enamel surface with Ag element diffusion", MATERIALS LETTERS, NORTH HOLLAND PUBLISHING COMPANY. AMSTERDAM, NL, vol. 62, no. 2, 24 November 2007 (2007-11-24), pages 262-265, XP022360800, ISSN: 0167-577X, DOI: 10.1016/J.MATLET.2007.05.022

## Description

The present invention relates to a method of manufacturing a visual communication board that has an enamel coat on the writing side i.e. a dry erasable board that can be written on with dry erasable felt-tip pens for example, or a coloured chalkboard or similar that can be written on with chalk.

Communication boards in offices or classrooms are used by a number of people every day which makes the board a potential risk for the spread of microorganisms as a result of contamination by contact or coughing for example, such that the board acts as a transfer medium for microorganisms.

Users of such boards are interested in a board with antimicrobial action to limit the use of antimicrobial products in classrooms or the office.

In general antimicrobial materials and coatings are obtained by adding specific agents with a microbicidal activity.

Organic antimicrobial substances are not resistant to the temperatures of the production process of an enamelled board.

Inorganic antimicrobial agents such as metals (Ag, Cu, Au, Zn, etc) or metal oxides such as ZnO, CaO or MgO, or metal salts such as AgNO₃ are indeed temperature resistant.

For some metals, it is in fact the metal ions (Ag+, Cu2+, Zn2+, etc) that are the active component. This means that moisture and oxygen must be present to enable the metal to form ions.

The antimicrobial activity of metal oxides such as ZnO is attributed to the formation of H₂0₂, O· and OH⁻ that can penetrate the cell wall and kill bacteria.

The most popular inorganic additives are Ag and Cu, which can be added in different forms: as nanoparticles, as metal oxide particles, as metal salt or even more complex forms, but also directly as ions on an ion exchanger-carrier such as zeolite or clay.

There are already many examples of materials with a silver or silver-based coating, such as silver-containing paints for example a wall paint for hospitals (Bioni Nature).

Antimicrobial writing boards of lacquered steel are supplied by Environmental Hygiene Products and are intended for use in hospitals or other places where contact with surfaces can lead to the spread of E. coli and other organisms (Antimicrobial whiteboard, Hospital Bulletin, January 2010, p.6).

EP 1.580.172 (2005) describes an antimicrobial phosphate glass with a content of up to 5% Ag₂O.

DE 102.006.026.033 (2007) describes a method for obtaining surfaces of glass and glass ceramic enriched with silver. The concentration of silver in the molten glass is limited to 0.1% by weight of silver salts to avoid precipitation. Alternative methods such as ion exchange and ion implantation are described to obtain surfaces enriched with silver.

A synergetic antimicrobial effect is obtained by adding 0.1 to 10% CuO to silver-containing antimicrobial glass (Synthesis and characterisation of bioactive and antibacterial glass ceramic, Advances in Applied Ceramics 107 (5), p. 234-244).

Ying Xu et al. describe the preparation of borosilicate glass and its antimicrobial properties by adding Ag₂O in concentrations between 0.5 and 3.0% (Study on the preparation and properties of silver-doped borosilicate antibacterial glass, Journal of non-crystalline solids 354, p. 1341-1345) (2008).

Antimicrobial glass is also described in a number of Chinese and Japanese patents such as in CN 101.580.342 (2009), in which a content of 1 to 5% Ag₂O₃ is used.

Enamel consists of borosilicate glass, for example, and metal ions or metal oxide precipitations to obtain colour effects.

Antimicrobial enamel is further described in:
US 6.303.183 (2001) describes antimicrobial porcelain enamel in which metallic silver is preferably used in a concentration of 0.1 to 3%, but zinc or copper is also used.

The antimicrobial effect of silver-containing enamel has been clearly demonstrated by Voss et al. (Evaluation of bacterial growth on various materials, 20th International Enamellers Congress, 15-19 May 2005, Istanbul).

WO 2006/133075 describes a cost-effective and practical acid-resistant porcelain enamel with antimicrobial properties for steel substrates. The porcelain enamel contains an optimum quantity of zinc and other constituents with good antimicrobial properties, without losing other important properties such as acid resistance.

WO 2006/088468 describes an antimicrobial enamel glazing composition with zinc borate to give antimicrobial properties to a number of enamelled products.

More recently a study by Luca Pignatti et al. described the addition of Ag2O, CuO and ZnO to different types of enamel compositions. Antibacterial tests clearly demonstrate the antibacterial effects (Definition of a new range of porcelain enamels with antibacterial characteristics and the method of the antibacterial power control, 21st International enamellers Congress, 18-22 May 2008, Shangai).

Enamelled communication boards for schools or offices must, even if they present an antimicrobial action, always satisfy the requirements of sustainability, erasability and acid and colour resistance that are placed on modern boards.

More specifically, in the case of interactive boards, the position-coding pattern must remain optically readable, even after long-term use in order to enable the reading instruments to form a positioned electronic reproduction of the information written on the communication panel.

Such an interactive communication panel and the accompanying reading instruments are described in detail in WO. 01/16872, whose content is incorporated in the current text by reference to it.
WO 02/37409 A1 (2002) describes a method for manufacturing an interactive writing board with electronic position detection made from firable compositions. The interactive communication board does not provide antimicrobial properties.

WO 2009/000053 describes an interactive communication board of enamelled steel, on which a position-coding pattern has been affixed by applying a print in a ceramic material that is annealed on the enamel coat at temperatures above 500°C. The writing surface of this interactive communication board does not provide antimicrobial properties.

For the purpose of obtaining an antimicrobial communication panel, the present invention thus concerns a visual communication panel that has an enamel coat on the writing side of the communication panel on which a dotted or striped pattern is applied by a printing technique on the enamelled writing side of the communication board, and is annealed on the enamelled surface of the communication board at a temperature of at least 500 °C, and consists of a ceramic material which contains a biocide with antimicrobial properties being silver, silver oxide, silver salt or silver ions coated directly on an ion exchanger or support such as zeolite or clay, and, whereby the content of silver, silver oxide, silver salt or silver ions in the ceramic material of the pattern is between 0.1 and 10% by weight.

An advantage of such a communication panel is that the writing side presents an antimicrobial activity, without detrimentally affecting the properties useful for its use as a communication board.

The high scratch resistance and wear resistance of such ceramic boards are preserved, as well as their excellent erasability and good acid and colour resistance, and this also after many cycles of use.

The antimicrobial action is assured by a wear-resistant pattern that remains a source of antimicrobial metal ions for the lifetime of the board.

In a preferred embodiment the pattern is an optically readable position-coding pattern for an interactive communication board.

An advantage of such a pattern is that it can be utilised by a reading device in order to enable the electronic recording of information on the board, such that the board can be used as an interactive board, but also has an antimicrobial surface for the hygienic protection of the users of it.

An advantage of silver compounds is that their antimicrobial activity always occurs at low doses of silver compounds so that the quantity of silver in the ceramic material of the pattern needs to be no more than 10% by weight, and as of 0.1% by weight the antimicrobial activity is already appreciable.

The ceramic paste used to print the position-coding pattern by screen printing can be composed as follows, for example:
1) 30 to 70 parts by weight colourless organic screen printing media for printing. These media evaporate completely during the annealing of the paste.
2) 20 to 60 parts by weight of borosilicate glass with the following composition: 19.9% Sodium; 0.9% Aluminium; 32.8% Silicon; 1.51% Sulphur; 16.0% Potassium; 5.7% Barium; 22.2% Titanium; 0.9% Copper.
3) 5 to 20 parts by weight ceramic pigment with the following composition: 1.1% Aluminium; 8.4% Silicon; 0.6% Sulphur; 30.9% Chromium; 4.3% Manganese; 28.2% Iron; 16.5% Copper; 10% Silver, silver oxide, silver salt or silver ions coated on an ion exchanger or support such as zeolite or clay.

The ceramic paste used for the dotted pattern can be such that the paste absorbs the light from the light source of the reading instrument, so that the optical detection of the pattern is improved.

More specifically the ceramic paste used can be such that it contains infrared light-absorbing or extra infrared reflecting contituents, when the light source with which the position-coding pattern is detected radiates an infrared light of 800-950 nm.

With the intention of better showing the characteristics of the invention, a preferred embodiment of an interactive enamelled visual communication board according to the invention is described hereinafter by way of an example, without any limiting nature, with reference to the accompanying drawings, wherein:
figure 1 schematically shows a visual communication board according to the invention;
figure 2 shows a general pattern that is not a position-coding pattern and can also occur as a solid area;
figure 3 shows a position-coding pattern;
figure 4 shows a position-coding pattern on a smaller scale;
figure 5 shows a cross-section according to line V-V of figure 1 on a larger scale.

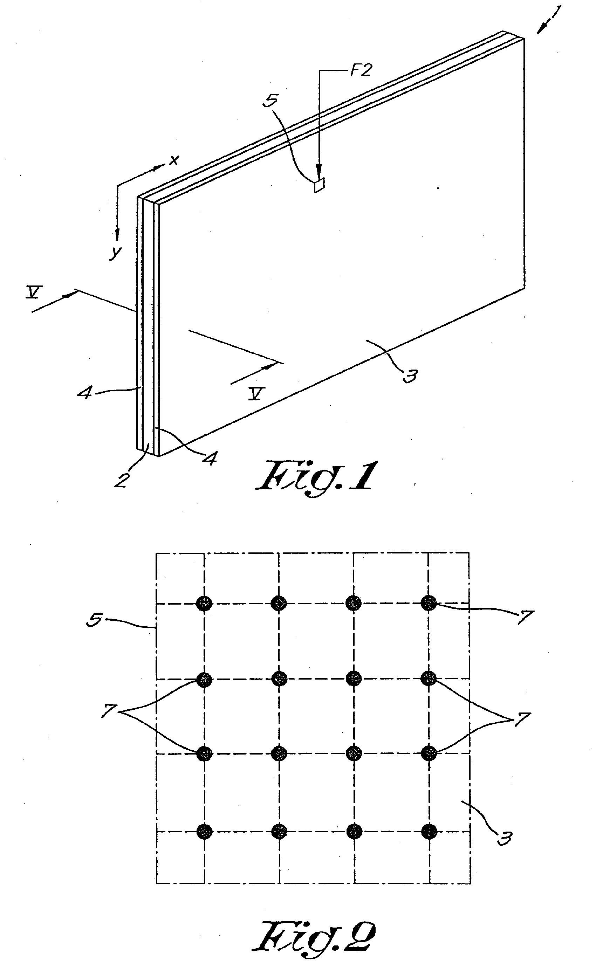

The visual communication panel 1 presented in figure 1 primarily consists of a steel plate 2, in this case 0.35 mm thick, which on the front 3 has an essentially white enamel coat 4, in this case 0.10 mm thick.

The front 3 or the writing side of the communication panel 1 also has a pattern 5.

The pattern 5 here consists of a regular pattern of small black dots 6, which in reality are applied over essentially the entire surface of the front 3 of the communication panel 1, and of which a detail is shown on a larger scale in figure 2.

Instead of a regular pattern of dots, the pattern can also be a position-coding pattern, in accordance with a pattern as described in WO 01/16872. The description concerned is incorporated into the present patent application by reference to it.

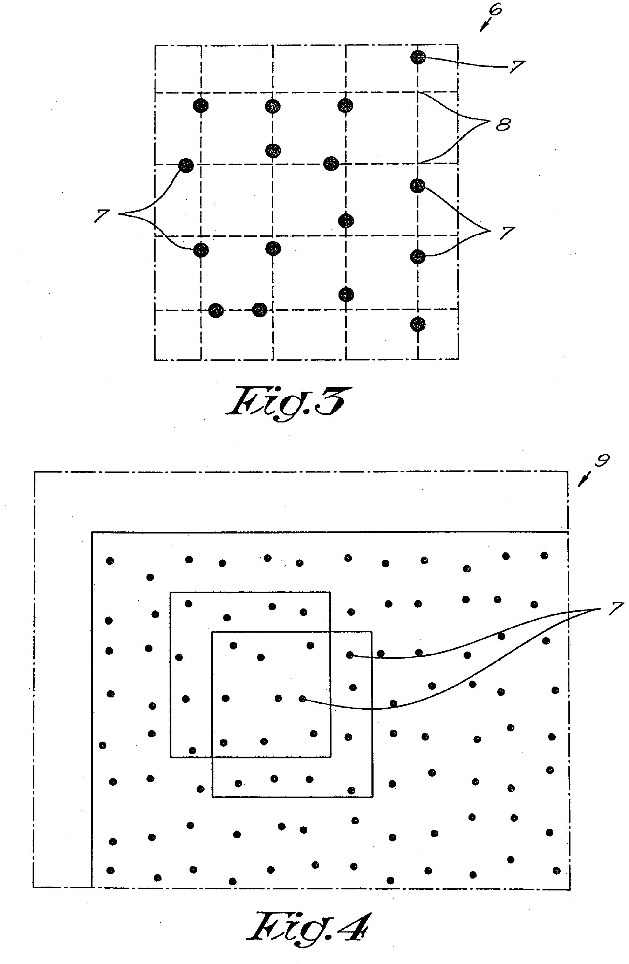

In brief, and as shown in figure 3, it comes down to there being a virtual raster, shown here in a dashed line but in reality not there, on the writing surface 3 of the communication panel 1, and near every virtual node 8 of the raster there is a dot 7, however displaced somewhat upwards, to the left, to the right or downwards with respect to the virtual node 8.

The distance between the nodes 8 here is 0.3 mm, the diameter of the dots 7 is 100 pm, and the displacement with respect to the virtual node is 50 µm.

Depending on the size of the communication panel 1 and the desired resolution of the positioning, four by four or sixteen dots 7 or six by six or thirty six dots 7 are sufficient to identify the position, for example.

By way of an example, figure 4 shows a position-coding pattern 9 in which the registration of the displacements of the four by four dots 7 with respect to the respective virtual nodes 8 is sufficient to identify each position.

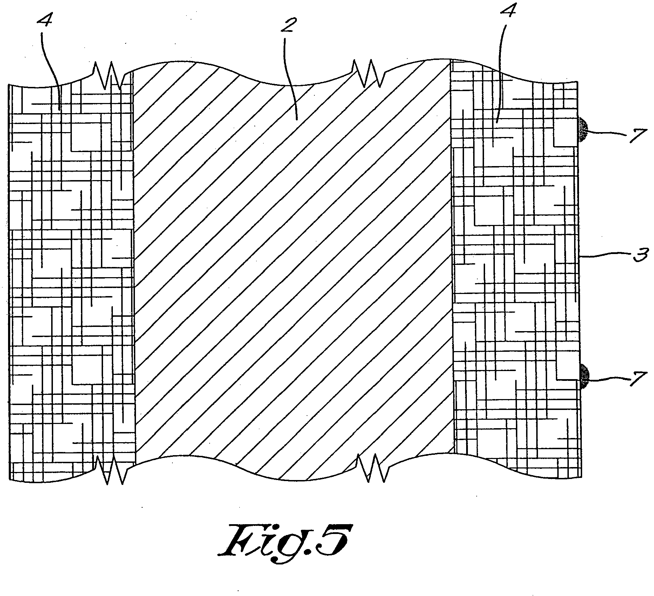

Figure 5 shows a cross-section of the communication panel 1 on a larger scale. Here the steel plate 2 is shown which has an essentially white enamel coat 4 on the front and the back.

A pattern 5 with dots 7 is applied on top of the enamel coat 4, in which a biocide with antimicrobial properties, such as a metal, metal oxide, metal salt or metal ions coated directly on an ion exchanger or support such as zeolite or clay, is processed.

A method for manufacturing a visual communication board that has an enamel coat on the writing side of the communication board according to this invention whereby a dotted or striped pattern is applied by a printing technique on the enamelled writing side of the communication board, whereby the printing technique can be any printing technique that can apply a ceramic-forming medium in the form of a pattern, such as screen printing or a direct photographic process, a digital printing technique such as inkjet, toner transfer, or a flexographic or deep-printing technique, or other transfer techniques such as decalcomania, whereby a ceramic-forming medium in the form of a coating or ink or composition with antimicrobial constituents is deposited as antimicrobial microdots, whereafter the pattern is annealed on the enamelled surface of the visual communication board at a temperature of at least 500 °C, whereby the content of silver, silver oxide or silver salt in the ceramic material of the patterns lies between 0,1 and 10 weight%, and the number of bacteria at the surface of the writing board is lowered by a factor of at least 100 within 24 hours by the antibacterial action of the surface

This can be done for example in a continuous process whereby the enamelled sheet thus obtained may be rolled up for later processing or immediately cut into plates that form the basis of a communication board 1.

The aforementioned pattern is applied by means of screen printing, whereby the screen selectively allows through screen-printing paste under pressure from a squeegee at the places where the dots 7 are desired. The screen printing paste contains biocides with antimicrobial properties such as metals, metal oxides, metal salts or metal ions coated directly on an ion exchanger or support such as zeolite or clay.

The dots of screen-printing paste, that contain enamel particles, antimicrobial constituents, and if desired pigment, are annealed at a temperature of less than the temperature at which the first layer or layers were annealed, for example at 740°C.

This technique provides the advantage that a pattern 5 can be applied with sufficient accuracy by means of a screen-printing technique.

If the pattern 5 is an optically readable position-coding pattern 9 for an interactive communication board, a higher accuracy is desirable and photographic methods can be used to apply the dots, as described in WO 01/16872.

It is clear that the descriptions of the different methods according to the invention for applying a pattern 5 do not exclude other methods being able to be used to apply patterns of antibacterial dots, whereby an enamel or enamel-containing ink or toner is applied to the enamelled surface of the communication board via a digital technique or transfer technique or otherwise, or by using other transfer techniques such as decalcomania.

It goes without saying that the dots that form the pattern can be of any arbitrary shape or even touch each other, if this turns out to be more practical for the application, as long as the desired surface properties of the communication board are preserved.

For example, the dots can be such that they give rise to a striped pattern or such that they give rise to a solid area.

It is also possible for a solid area to be applied with a continuous printing system such as dip coating, spray coating or roll coating whereby the antimicrobial material is applied as a continuous layer.

It is clear that if the pattern is a position-coding pattern, shown above in general as darker dots, there can also be light-absorbing or extra reflecting constituents in the dots.

Such an embodiment can be particularly useful with coloured chalk boards that can be written on with chalk or similar, and/or when the light source with which the position-coding pattern is detected radiates an infrared light.

In order to verify the antibacterial properties of the pattern it has to be measured.

The antibacterial properties of a surface are normally measured with a 'contact' method. This procedure is described in the ISO 22196:2007 standard, which has become the international industrial standard.

In this method a bacterial culture is placed on the surface to be measured. After a specified time the culture is rinsed off and a part of the liquid is placed on an agar medium. The same procedure is repeated on a reference surface.

After a certain time the level of bacterial growth on the agar is measured and the proportion of bacterial growth of the test sample is compared to the reference sample whereby the ratio between the two is a measure of the antibacterial properties of the test surface.

This method is applied for the strain Escherichia coli or another microorganism.

The antibacterial activity is indicated by a figure that represents the logarithm of the ratio between the number of bacteria on the surface without antimicrobial treatment and the number of bacteria on the same surface but with antimicrobial treatment. If this figure is 6 for example, it means that only one in a million bacteria remain after the measurement time interval through the action of the antibacterial activity.

In the following experiment a standard enamelled board of Polyvision was provided with a pattern by screen printing a screen-printing medium, in which 3% Ag₂O, 5% Ag₂O or 3% AgNO₃ was added as an antimicrobial agent.

The measured antibacterial activity is shown in table I.

**Table I: Comparison of the antibacterial activity on a logarithmic scale of antibacterial additives in the screen-printing medium after printing the surface of an enamelled communication board.**

| Sample No. | Antibacterial addition to the screen-printing medium | Antibacterial activity |
|---|---|---|
| 1 | None | 0 |
| 2 | 3% Ag₂O | 1 |
| 3 | 5% Ag₂O | 2 |
| 4 | 3% AgNO₃ | 6 |

It is clear that the addition of silver compounds to the screen-printing medium can develop a measurable antibacterial activity.

The present invention is by no means limited to the embodiment described as an example and shown in the drawings, but such a communication panel with antibacterial metals or metal oxides can be realised in all kinds of variants, without departing from the scope of the invention.

## Claims

1. Method for manufacturing a visual communication board (1) that has an enamel coat on the writing side of the communication panel, **characterised in that** a dotted or striped pattern is applied by a printing technique on the enamelled writing side of the communication board, whereby the printing technique can be any printing technique that can apply a ceramic-forming medium in the form of a pattern, such as screen printing or a direct photographic process, a digital printing technique such as inkjet, toner transfer, or a flexographic or deep-printing technique, or other transfer techniques such as decalcomania, whereby a ceramic-forming medium in the form of a coating or ink or composition with antimicrobial constituents is deposited as antimicrobial microdots, whereafter the pattern is annealed on the enamelled surface of the visual communication board at a temperature of at least 500°C, whereby the content of silver, silver oxide or silver salt in the ceramic material of the patterns lies between 0,1 and 10 weight%, and the number of bacteria at the surface of the writing board is lowered by a factor of at least 100 within 24 hours by the antibacterial action of the surface.

2. Method according to claim 1, **characterised in that** the antimicrobial constituents are silver, silver oxide, silver salt or silver ions coated directly on an ion exchanger or support such as zeolite or clay, and whereby the content of silver, silver oxide, silver salt or silver ions in the ceramic material of the pattern is between 0.1 and 10% by weight.

3. Method according to claim 1, **characterised in that** the pattern is an optically readable position-coding pattern for an interactive communication board.

4. Method according to claim 3, **characterised in that** the dots can contain infrared light-absorbing or extra infrared reflecting constituents, when the light source with which the position-coding pattern is detected radiates an infrared light.

## Patentansprüche

1. Verfahren zum Herstellen einer visuellen Kommunikationstafel (1), die auf der Schreibseite der Kommunikationsplatte eine Emailbeschichtung aufweist, **dadurch gekennzeichnet, dass** ein gepunktetes oder gestreiftes Muster durch eine Drucktechnik auf die emaillierte Schreibseite der Kommunikationsplatte aufgebracht wird, wodurch die Drucktechnik eine beliebige Drucktechnik sein kann, die ein keramikformendes Medium in Form eines Musters aufbringen kann, wie etwa Siebdruck oder ein direkter fotografischer Vorgang, eine Digitaldrucktechnik wie etwa Tintenstrahl, Tonerübertragung oder Flexo- oder Tiefdrucktechnik oder andere Übertragungstechniken wie etwa Abziehbilderverfahren, wodurch ein keramikformendes Medium in Form einer Beschichtung oder Tinte oder einer Zusammensetzung mit antimikrobiellen Bestandteilen als antimikrobielle Mikropunkte abgeschieden wird, wonach das Muster auf der emaillierten Oberfläche der visuellen Kommunikationsplatte bei einer Temperatur von wenigstens 500 °C getempert wird, wodurch der Gehalt an Silber, Silberoxid oder Silbersalz in dem Keramikmaterial der Muster zwischen 0,1 und 10 Gew.-% liegt und die Anzahl der Bakterien auf der Oberfläche der Schreibtafel durch die antibakterielle Wirkung der Oberfläche innerhalb von 24 Stunden um einen Faktor von wenigstens 100 verringert wird.

2. Verfahren nach Anspruch 1, **dadurch gekennzeichnet, dass** die antimikrobiellen Bestandteile Silber, Silberoxid, Silbersalz oder Silberionen sind, die auf einen Ionenaustauscher oder -carrier wie etwa Zeolith oder Ton direkt als Beschichtung aufgetragen sind, und wodurch der Gehalt an Silber, Silberoxid, Silbersalz oder Silberionen in dem Keramikmaterial des Musters zwischen 0,1 und 10 Gew.-% liegt.

3. Verfahren nach Anspruch 1, **dadurch gekennzeichnet, dass** das Muster ein optisch lesbares Positionscodierungsmuster für eine interaktive Kommunikationstafel ist.

4. Verfahren nach Anspruch 3, **dadurch gekennzeichnet, dass** die Punkte infrarotlichtabsorbierende oder zusätzliche infrarotreflektierende Bestandteile enthalten können, wenn die Lichtquelle, mit der das Positionscodierungsmuster erfasst wird, ein Infrarotlicht ausstrahlt.

## Revendications

1. Procédé destiné à la fabrication d'un tableau de communication visuelle (1) qui possède une couche d'émail sur le côté du panneau de communication, réservé à l'écriture, **caractérisé en ce que** l'on applique un motif en pointillé ou à rayures par l'intermédiaire d'une technique d'impression sur le côté émaillé du tableau de communication, réservé à l'écriture, dans lequel la technique d'impression peut représenter n'importe quelle technique d'impression qui permet d'appliquer un milieu formant de la céramique sous la forme d'un motif, comme par exemple l'impression sérigraphique ou un procédé photographique direct, une technique d'impression numérique comme par exemple une technique d'impression par jet d'encre, par transfert de toner ou encore une technique d'impression flexographique ou d'impression en creux, ou encore d'autres techniques de transfert telles que la décalcomanie, dans lequel on dépose un milieu formant de la céramique sous la forme d'une enduction ou d'une encre ou d'une composition comprenant des constituants antimicrobiens sous la forme de points microscopiques antimicrobiens, après quoi on soumet le motif à un recuit sur la surface émaillée du tableau de communication visuelle à une température d'au moins 500 °C, dans lequel la teneur en argent, en oxyde d'argent ou en sel d'argent de la matière céramique des motifs se situe entre 0,1 et 10 % en poids, et le nombre de bactéries à la surface du tableau d'écriture est diminué d'un facteur d'au moins 100 dans un laps de temps de 24 heures par l'intermédiaire de l'action antibactérienne de la surface.

2. Procédé selon la revendication 1, **caractérisé en ce que** les constituants antimicrobiens représentent de l'argent, de l'oxyde d'argent, un sel d'argent ou des ions argent déposés directement sur un support ou un échangeur d'ions, tel que la zéolithe ou l'argile, et dans lequel la teneur en argent, en oxyde d'argent, en sel d'argent ou en ions argent de la matière céramique du motif se situe entre 0,1 et 10 % en poids.

3. Procédé selon la revendication 1, **caractérisé en ce que** le motif est un motif de codage de position lisible par voie optique destiné à un tableau de communication interactif.

4. Procédé selon la revendication 3, **caractérisé en ce que** les points peuvent contenir des constituants qui absorbent la lumière infrarouge ou des constituants supplémentaires réfléchissant l'infrarouge, lorsque la source de lumière avec laquelle le motif de codage de position est détecté irradie une lumière infrarouge.
